(19) Europäisches Patentamt
European Patent Office
Office européen des brevets

(11) **EP 3 597 604 B1**

(12) **EUROPEAN PATENT SPECIFICATION**

(45) Date of publication and mention
of the grant of the patent:
**09.11.2022 Bulletin 2022/45**

(21) Application number: **19180188.5**

(22) Date of filing: **14.06.2019**

(51) International Patent Classification (IPC):
**C01G 53/00** *(2006.01)*

(52) Cooperative Patent Classification (CPC):
**C01G 53/50;** C01P 2004/03; C01P 2006/40;
Y02E 60/10; Y02P 70/50

(54) **POSITIVE ACTIVE MATERIAL, PREPARATION METHOD THEREOF AND POSITIVE ELECTRODE PLATE AND LITHIUM-ION SECONDARY BATTERY**

POSITIVAKTIVMATERIAL, HERSTELLUNGSVERFAHREN DAFÜR UND POSITIVELEKTRODENPLATTE UND LITHIUM-IONEN-SEKUNDÄRBATTERIE

MATÉRIAU ACTIF POSITIF, PROCÉDÉ DE PRÉPARATION ASSOCIÉ ET PLAQUE D'ÉLECTRODE POSITIVE ET BATTERIE SECONDAIRE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2018 CN 201810782361**

(43) Date of publication of application:
**22.01.2020 Bulletin 2020/04**

(73) Proprietor: **Contemporary Amperex Technology
Co., Limited
Jiaocheng District
Ningde City,
Fujian 352100 (CN)**

(72) Inventors:
• **WU, Qi
  Ningde City, Fujian 352100 (CN)**
• **HE, Jinhua
  Ningde City, Fujian 352100 (CN)**
• **JI, Changyin
  Ningde City, Fujian 352100 (CN)**
• **LIU, Liangbin
  Ningde City, Fujian 352100 (CN)**

(74) Representative: **Thoma, Michael
Lorenz Seidler Gossel
Rechtsanwälte Patentanwälte
Partnerschaft mbB
Widenmayerstraße 23
80538 München (DE)**

(56) References cited:
WO-A1-2017/138309    WO-A1-2018/048085
CN-B- 105 118 991     KR-A- 20170 075 596

Remarks:
The file contains technical information submitted after the application was filed and not included in this specification

**Description**

**BATTERY**

**TECHNICAL FIELD**

The present application belongs to the technical field of batteries, and in particular relates to a positive active material, preparation method thereof, and a positive electrode plate and a lithium-ion secondary battery.

**BACKGROUND**

At present, lithium-ion secondary batteries are widely used in electric vehicles and electronic products due to the advantages such as high voltage platform, high specific energy, no memory effect, low environmental pollution and the like, occupying the core position of power batteries. However, the short mileage and the existence of safety hazards are important factors that restrict the rapid development of new energy electric vehicles. Electronic products cause inconvenience to users due to frequent charging, and also cause battery capacity and service life to be attenuated. With the continuous development of science and technology and the continuous improvement of people's living standards, the energy density, cycle performance and safety performance of power batteries are also put forward higher requirements.

The prior art improves the cycle performance and safety performance of the lithium-ion secondary battery to some extent by doping modification and surface coating modification of the positive active material, but the effect is very common. As the lithium-ion secondary battery is repeatedly charged and discharged, its capacity is rapidly reduced, especially at high temperature, and the safety performance of lithium-ion secondary battery at high temperature is still low. In particular, doping modification and surface coating modification of the positive active material also sacrifice the capacity and energy density of the lithium-ion secondary battery . WO 2017/138309 A1 discloses a positive electrode material containing lithium, nickel, manganese oxide as bulk material, coated by a similar composition but doped with magnesium, aluminium, boron, zinc, titanium, calcium, or zirconium. The doping element is distributed among a gradient from the surface to the center. CN 105 118 991 B has a similar teaching where the doping elements is chosen among titanium, zirconium, manganese and tin, or aluminium, magnesium and zirconium. The dopant material is however part of the coating.

**SUMMARY**

Embodiments of the present application provide a positive active material, preparation method thereof, and a positive electrode plate and a lithium-ion secondary battery, which can improve the capacity, energy density, cycle performance, and safety performance of the lithium-ion secondary battery.

A first aspect of the present application provides a positive active material comprising: active material bulk particles and a coating layer of an oxide containing N element coated on an outer surface of the active material bulk particles; wherein the surface of the active material bulk particle is doped with M element to form a doped layer, and the content of M element in the doped layer is 400 ppm to 3000 ppm, and the content of M element gradually decreases from the outer surface of the active material bulk particles towards the core direction; wherein the content of N element in the coating layer is 100 ppm to 2000 ppm; wherein the M element and the N element are each independently selected from one or more of Mg, Ca, Ce, Ti, Zr, Al, Zn and B; wherein the content of M element and the content of N element are both based on the positive active material, and the average content of the N element per unit volume of the coating layer is larger than the average content of the M element per unit volume of the doped layer. ;wherein the positive active material is a lithium transition metal oxide having a layered structure, and the lithium transition metal oxide having a layer structure is a compound represented by the formula (1), $Li_{1+a}[Ni_xCo_yMn_zA_dM_bN_c]O_{2-e}Xe$ (1) wherein A is selected from one or more of Mg, Ca, Ce, Ti, Zr, Al, Zn and B, and X is selected from one or more of S, N, F, Cl, Br and I; wherein X is selected from one or more of S, N. F, Cl. Br and I; wherein $0<x<1$; $0\leq y<0.3$; $0\leq z<0.3$; $0<a<0.2$; $0<b<0.2$; $0<c<0.1$; $0\leq d<0.2$; $0\leq e\leq0.2$, $x+y+z+b+d+c=1$, preferably, $0.6<x<1$; wherein the thickness of the doped layer is from 10% to 30% of the average particle diameter of the active material bulk particles; and/or wherein the thickness of the coating layer is from 0.001 pm to 0.2 pm.

A second aspect of the present application provides a positive electrode plate comprising a current collector and a positive electrode film disposed on at least one surface of the current collector, wherein the positive electrode film comprises the positive active material provided by the first aspect of the present application.

A third aspect of the present application provides a lithium-ion secondary battery comprising a positive electrode plate, a negative electrode plate, a separator, and an electrolyte, wherein the positive electrode plate is the positive electrode plate provided by the second aspect of the present application.

A fourth aspect of the present application provides a method for preparing the positive active material according to provided by the first aspect of the present application, characterized in that the method comprises: mixing a transition metal source with a lithium source and performing a sintering treatment to obtain active material matrix particles; mixing the active material matrix particles with a source of M element and performing a sintering treatment to form a doped layer on the surface of the particles by doping with the M element, thereby obtaining active material bulk particles; mixing the active material bulk particles with a source of N element and performing a sintering treatment to form a coating layer of an oxide containing N element on the outer surface of the active material bulk particles to obtain a positive active material; wherein in the step of mixing the transition metal source with the lithium source and performing the sintering treatment to obtain active material matrix particles, the sintering temperature is 700°C to 950°C, and the sintering time is 5 h to 25 h; and/or, in the step of mixing the active material matrix particles with the source of M element and performing a sintering treatment to dope the M element on the surface of the particles to form a doped layer to obtain the active material bulk particles, the sintering temperature is 500°C to 750°C, and the sintering time is 5 h to 25 h; and/or in the step of mixing the active material bulk particles with the source of N element and performing a sintering treatment to form a coating layer of an oxide containing N element on the outer surface of the active material bulk particles to obtain a positive active material, the sintering temperature is 200°C to 500°C, and the sintering time is 5 h to 25 h.

The positive active material, the preparation method thereof, and the positive electrode plate and the lithium-ion secondary battery provided by the present application, significantly improve the capacity, energy density, cycle performance and safety performance of the lithium-ion secondary battery, by doping M element on the surface of the active material bulk particles, and coating the oxide of N element on the outer surface of the active material bulk particles, while controlling the type and content of the M element and the N element within a predetermined range.

## DESCRIPTION OF THE DRAWINGS

In order to more clearly illustrate the technical solutions of the embodiments of the present application, the drawings used in the embodiments of the present application will be briefly described below. For those skilled in the art, without any creative work, other drawings can be obtained from these figures.

Fig.1 shows a scanning electron microscope (SEM) image of a positive active material provided in Example 1 of the present application.
Fig.2 is a graph showing the first charge and discharge curves of the buckle battery provided in Example 1 of the present application.
Fig. 3 is a graph showing the cycle at 25°C of the wound battery provided in Example 1 of the present application.
Fig. 4 is a graph showing the flatulence curve at 80°C of the wound battery provided in Example 1 of the present application.

## DETAILED DESCRIPTION

In order to make the objects, technical solutions, and advantageous technical effects of the present application more clear, the present application will be further described in detail below with reference to the embodiments. It is to be understood that the embodiments described herein are merely illustrative of the invention and are not intended to limit the invention.

In the context herein, unless otherwise indicated, "above" and "below" are inclusive of the number itself, and "more" in the expression "one or more" means two or more.

The above summary of the present application is not intended to describe each disclosed embodiment or every implementation. The following description more particularly exemplifies the exemplary embodiments. In many places throughout the application, guidance is provided through a series of embodiments that can be used in various combinations. In each instance, the list is merely representative and should not be construed as exhaustive.

### Positive active material

A first aspect of the present application provides a positive active material comprising active material bulk particles and a coating layer coated on an outer surface of the active material bulk particles.

The active material bulk particles comprise a lithium transition metal oxide. The lithium transition metal oxide may be represented, by the chemical formula $Li_{1+a}MeO_2$ (0<a<0.2), and Me may be, one or more transition metal elements selected from the group consisting of Ni, Co, and Mn, and a part of Me may also be substituted by A element, wherein the A element may be selected from, one or more of Mg, Ca, Ce, Ti, Zr, Al, Zn, and B.

The surface of active material bulk particles is formed with a doped layer by doping M element. The M element is selected from one or more of Mg, Ca, Ce, Ti, Zr, Al, Zn, and B. The content of the M element is 400 ppm to 3000 ppm based on the positive active material, and the content of the M element gradually decreases from the outer surface of the active material bulk particles towards the core direction.

Doping M element can improve the structural stability of the active material bulk particles, improve high and low temperature cycle performance of the positive active material. Since only a small amount of surface of the active material bulk particles is doped, the doping element content tends to be gradually decreased from the outer surface of the active material bulk particles towards the core direction, which does not reduce the rate performance of the material. This also improves the capacity, energy density, and safety performance of the lithium-ion secondary battery. Preferably, the thickness of the doped layer is from 10% to 30% of the average particle diameter of the active material bulk particles.

The coating layer is closely combined with the active material bulk particles, and the interfaces thereof are matched with each other. The coating layer does not damage the structure of the active material bulk particles, and protects the active material bulk particles by isolating the active material bulk particles with the electrolyte, which prevents side reactions between the active material particles and the electrolyte, effectively suppresses battery flatulence and improves battery safety. The coating layer comprises an oxide containing N element, wherein the N element is preferably selected from one or more of Mg, Ca, Ce, Ti, Zr, Al, Zn, and B. The content of the N element is 100 ppm to 2000 ppm based on the positive active material. Since only a small amount of surface of the active material bulk particles is coated, the N element is substantially or completely not diffused into the interior of the active material bulk particles, and the rate performance of the material is not lowered. The thickness of the coating layer is from 0.001 $\mu$m to 0.2 $\mu$m.

Further, the average content of the N element per unit volume of the coating layer is larger than the average content of the M element per unit volume of the doped layer. That is to say, there is a relatively high concentration of N element in the coating layer and a relatively low concentration of M element in the doped layer. The modifying element is mainly present on the surface portion of the positive active material, thereby facilitating surface protection of the positive active material, stabilizing the structure of the active material bulk particles, improving the safety performance and cycle performance of the lithium-ion secondary battery, and simultaneously making the lithium-ion secondary battery have higher capacity and energy density as well as higher rate performance.

The N element in the coating layer may be the same as the M element in the doped layer, for example, both are L element, wherein the L element is selected from one or more of Mg, Ca, Ce, Ti, Zr, Al, Zn, and B. Further, the concentration of the L element gradually decreases from the outer surface of the positive active material towards the core direction. The L element is mainly present in the surface portion of the positive active material, which is advantageous for forming surface protection to the positive active material, stabilizing the structure of the active material bulk particles, improving the safety performance and cycle performance of the lithium-ion secondary battery, and enabling the lithium-ion secondary battery have high capacity and energy density as well as high rate performance.

Of course, in some other embodiments, the N element in the coating layer and the M element in the doped layer may also be different.

Preferably, in the positive active material, the ratio of the sum of the content of the M element and the content of the N element to the average particle diameter of the positive active material is from 25 ppm/$\mu$m to 1000 ppm/$\mu$m. This is advantageous for improving the safety performance, cycle performance, capacity, and energy density of the lithium-ion secondary battery.

The positive active material is a secondary particle formed by agglomeration of primary particles. The primary particle has a longest dimension and a shortest dimension, and the ratio of the longest dimension to the shortest dimension is 1:1~3:1. For example, in some embodiments, the primary particulate is a cuboid-like structure having an aspect ratio of 1:1~3:1. The average particle diameter $D_v50$ of the secondary particle is preferably from 5 $\mu$m to 20 $\mu$m, which is advantageous for the electrochemical performance of the positive active material, thereby contributing to improve capacity, energy density, rate performance, and cycle performance of the battery. The average particle diameter $D_v50$ of the secondary particle is more preferably 8 $\mu$m to 15 $\mu$m, and still more preferably 9 $\mu$m to 11 $\mu$m.

The average particle diameter $D_v50$ is used to characterize the particle size of the positive active material, and the physical meaning thereof is the particle diameter of the positive active material corresponding to the cumulative volume fraction of 50%, that is to say, the volume of the positive active material smaller than such particle diameter accounts for 50% of the total volume of the positive active material. The average particle size Dv50 can be determined by methods well known in the art, such as by a laser particle size analyzer (e.g., Malvern Mastersizer 3000).

The specific surface area of the positive active material is preferably 0.2 $m^2$/g to 1 $m^2$/g, and more preferably 0.3 $m^2$/g to 0.8 $m^2$/g. This is advantageous in that the capacity, energy density, cycle performance, and rate performance of the lithium-ion secondary battery are improved.

Preferably, the outer surface of the coating layer is a rough surface to improve the specific surface area of the positive active material.

The amount of residual lithium on the surface of the positive active material is preferably 1000 ppm or less, and more preferably 800 ppm or less. This can improve the processing performance of the positive active material, make the positive electrode slurry easy to process and coat, and reduce the irreversible capacity loss of the material, improve the cycle performance, and can also reduce the flatulence of the battery and improve the safety performance.

The positive active material is a lithium transition metal oxide having a layered structure, wherein the lithium transition metal oxide having a layered structure is a compound represented by the formula (1).

$$Li_{1+a}[Ni_xCo_yMn_zA_dM_bN_c]O_{2-e}X_e \qquad (1)$$

In the formula (1), A is selected from one or more of Mg, Ca, Ce, Ti, Zr, Al, Zn and B, and X is selected from one or more of S, N, F, Cl, Br and I, wherein $0<x<1$, $0\leq y<0.3$, $0\leq z<0.3$, $0<a<0.2$, $0<b<0.2$, $0<c<0.1$, $0\leq d<0.2$, $0\leq e\leq 0.2$, $x+y+z+b+d+c=1$, preferably, $0.6 < x < 1$.

The X element may be on the outer surface of the active material bulk particles, and be coated inside the coating layer; or may be present in the coating layer by replacing at least a part of the oxygen element in the coating layer with an X element. The element X can make the structure of the positive active material more stable and improve the interface stability of the positive active material.

The positive active material provided by the present application can effectively stabilize the structure of the positive active material, improve the surface protection to the positive active material, avoid side reactions with the electrolyte, and improve the cycle performance and safety performance of the lithium-ion secondary battery, at the same time improve the capacity and energy density of lithium-ion secondary batteries. Among them, the safety performance and cycle performance of the lithium-ion secondary battery at high and low temperatures are improved.

**Method for preparing cathode active material**

In order to realize the above positive active material, a second aspect of the present application provides a method for preparing a positive active material, comprising:

Step S10: mixing a transition metal source with a lithium source and performing a sintering treatment to obtain active material matrix particles.

The transition metal source is one or more of an oxide and a hydroxide containing transition metal. For example, regarding the positive active material represented by the above formula (1), the transition metal source may be one or more of a composite oxide and a composite hydroxide containing Ni, Co, and Mn, such as $[Ni_xCo_yMn_z](OH)_2$.

$[Ni_xCo_yMn_z](OH)_2$ can be obtained by a method known in the art. As an example, the Ni source, the Co source, and the Mn source are dispersed in a solvent to obtain a mixed solution; the mixed solution, the strong alkali solution, and the complexing agent solution are simultaneously pumped into the stirred reactor by a continuous cocurrent reaction. The pH of the reaction solution is controlled to be 10-13, and the temperature in the reactor is 25°C ~ 90°C, and the reaction is carried under inert gas protection. After the reaction is completed, it is aged, filtered, washed and vacuum dried to obtain $[Ni_xCo_yMn_z](OH)_2$. The Ni source may be one or more of nickel chloride, nickel sulfate, nickel nitrate, nickel oxide, nickel hydroxide, nickel fluoride, nickel carbonate, nickel phosphate, and an organic compound of nickel; the Co source may be one or more of cobalt chloride, cobalt sulfate, cobalt nitrate, cobalt oxide, cobalt hydroxide, cobalt fluoride, cobalt carbonate, cobalt phosphate and an organic compound of cobalt; the Mn source may be one or more of manganese chloride, manganese sulfate, manganese nitrate, manganese oxide, manganese hydroxide, manganese fluoride, manganese carbonate, manganese phosphate and an organic compound of manganese; the strong base may be one or two of sodium hydroxide and potassium hydroxide; the complexing agent may be one or two of ammonia water and oxalic acid. But they are not limited to these materials.

The lithium source may be, but not limited to, one or more of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), and lithium nitrate ($LiNO_3$).

The transition metal source and the lithium source may be mixed by using a ball mill mixer or a high speed mixer. As an example, the transition metal source and the lithium source are mixed in a high speed mixer for a mixing time of 0.5 h to 2 h.

Alternatively, when a part of Me is substituted by A element, in step S10, the transition metal source, the source of the A element and the lithium source may be mixed to obtain a mixture, and the mixture is sintered to obtain an active substance matrix particles.

Preferably, the source of the A element is added in an amount such that the content of the A element in the positive active material is from 100 ppm to 3,000 ppm.

The source of the A element is, but not limited to, one or more of a chloride, a sulfate, a nitrate, an oxide, a hydroxide, a fluoride, a carbonate, a phosphate, a dihydrogen phosphate, and an organic compound containing the A element.

The transition metal source, the source of the A element, and the lithium source may be mixed by using a ball mill mixer or a high speed mixer. As an example, the transition metal source, the source of the A element, and the lithium source are mixed in a high speed mixer for a mixing time of 0.5 h to 2 h.

Further, the mixed material is added to an atmosphere sintering furnace for sintering. The sintering atmosphere is an air atmosphere or an oxygen atmosphere, preferably an oxygen atmosphere, and the oxygen concentration in the oxygen atmosphere is preferably 50% to 100%, further preferably 80% to 100%; the sintering temperature is 700°C to 950°C; and the sintering time is 5 h~25 h, preferably 10 h~20 h.

Step S20: mixing the active material matrix particles with the source of the M element and performing a sintering treatment to dope the M element on the surface of the particles to form a doped layer, thereby obtaining active material bulk particles.

The source of the M element is, but not limited to, one or more of a chloride, a sulfate, a nitrate, an oxide, a hydroxide, a fluoride, a carbonate, a phosphate, a dihydrogen phosphate, and an organic compound containing an M element.

The active material matrix particles and the source of the M element may be mixed by using a ball mill mixer or a high speed mixer. As an example, the active material matrix material and the source of the M element are mixed in a high speed mixer for a mixing time of 0.5 h to 2 h.

The mixed materials are added to an atmosphere sintering furnace for sintering. The sintering atmosphere is an air atmosphere or an oxygen atmosphere, preferably an oxygen atmosphere, and the oxygen concentration in the oxygen atmosphere is preferably 50% to 100%, further preferably 80% to 100%; the sintering temperature is 500°C to 750°C; and the sintering time is 5 h~25 h, preferably 5 h~10 h. During the sintering process, the M element diffuses from the outer surface of the particles to the bulk phase to a predetermined depth, thereby improving the structural stability of the active material bulk particles. Since the M element doping is carried out after complete lithiation, it is advantageous for the M element to exist as much as possible on the surface of the particles, so that the concentration of the M element gradually decreases from the outer surface of the active material bulk particles towards the core direction, which is advantageous for improving cycle performance at high and low temperature, safety performance, capacity and energy density of the material.

Step S30: mixing the active material bulk particles with the source of the N element and performing a sintering treatment to form a coating layer of an oxide containing N element on the outer surface of the active material bulk particles to obtain a positive active material.

The source of the N element is, but it is not limited to, one or more of a chloride, a sulfate, a nitrate, an oxide, a hydroxide, a fluoride, a carbonate, a phosphate, a dihydrogen phosphate, and an organic compound containing an N element.

The source of the active material bulk particles and the N element may be mixed by using a ball mill mixer or a high speed mixer. As an example, the active material bulk particles and the source of the N element are mixed in a high speed mixer for a mixing time of 0.5 h to 2 h.

The mixed materials are added to an atmosphere sintering furnace for sintering. The sintering atmosphere is an air atmosphere or an oxygen atmosphere, preferably an oxygen atmosphere, and the oxygen concentration in the oxygen atmosphere is preferably 50% to 100%, further preferably 80% to 100%; the sintering temperature is 200°C to 500°C; and the sintering time is 5 h~25 h, preferably 5 h~10 h. Due to the lower sintering temperature, the oxide of the N element is mainly coated on the surface of the active material bulk particles, and substantially or completely does not diffuse into the interior of the active material bulk particles, thereby better protecting the surface of the active material bulk particles, isolating the active material bulk particles and electrolyte, avoiding the side reaction between the active material bulk particles and the electrolyte, and improving the cycle performance and safety performance of the lithium-ion secondary battery, including improving the safety performance and cycle performance of the lithium-ion secondary battery at high temperature.

Optionally, after step S20, further comprising: washing the active material bulk particles in a solution of a boron-containing compound, and drying.

The solvent in the solution may be one or two of deionized water and ethanol, and the concentration of the boron-containing compound is preferably from 0.01 mol/L to 1 mol/L. The boron-containing compound may be selected from one or more of $BCl_3$, $B_2(SO_4)_3$, $B(NO_3)_3$, $BN$, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ and $(C_3H_7O)_3B$.

The washing can be done by a washing tank with agitation. The solution of a boron-containing compound and the active material bulk particles are added to the washing tank for washing, wherein the weight ratio of the active material bulk particles and the solution of a boron-containing compound (hereinafter referred to as solid-liquid ratio) is preferably 1:0.5 to 1:10, more preferably is 1:1 to 1:5; the washing temperature is 10°C~50°C, preferably 20°C~40°C; wherein the washing time is 1 min~30 min, preferably 2 min~10 min; and wherein the washing speed is 10 r/min to 500 r/min, preferably 20 r/min to 200 r/min. After washing, the material is centrifuged to obtain the washed active material bulk particles, and dried in a vacuum environment, for example, in a vacuum drying oven, wherein the drying temperature is 80°C to 150°C, preferably 90°C to 120°C; and wherein the drying time is 2 h to 20 h, preferably 5 h to 10 h.

By washing with a solution of a boron-containing compound, the amount of residual lithium in the material can be greatly reduced, and the amount of residual lithium can be reduced to 1000 ppm or less, preferably 800 ppm or less.

The schemes and features described in the first aspect of the present application may also be applied to the method in the second aspect of the present application, and details are not described herein again.

### Positive electrode plate

A third aspect of the present application provides a positive electrode plate comprising a positive electrode current collector and a positive electrode film disposed on at least one surface of the positive electrode current collector, wherein the positive electrode film comprises the positive active material provided in the first aspect according to an embodiment of the present application.

Further, the positive electrode film optionally comprises a conductive agent and a binder. The type of the conductive agent and the binder are not specifically limited in the present application, and may be selected according to actual needs.

As an example, the binder may be styrene butadiene rubber (SBR), water-based acrylic resin, carboxymethyl cellulose (CMC), SD-3, polyvinylidene fluoride (PVDF), polytetrafluoroethylene (PTFE), polyvinyl butyral (PVB), ethylene-vinyl acetate copolymer (EVA), and polyvinyl alcohol (PVA).

As an example, the conductive agent may be selected from one or more of graphite, superconducting carbon, acetylene black, carbon black, ketjen black, carbon dots, carbon nanotubes, graphene, and carbon nanofibers.

The positive electrode current collector may be a material such as a metal foil, a carbon coated metal foil or a porous metal plate, for example an aluminum foil.

The positive electrode plate can be prepared according to a conventional method in the art. The positive active material and the optional conductive agent and binder are usually dispersed in a solvent (for example, N-methylpyrrolidone, abbreviated as NMP) to form a uniform positive electrode slurry, and the positive electrode slurry is coated on the positive electrode current collector. After the steps of drying, rolling, etc., a positive electrode plate is obtained.

### Lithium-ion secondary battery

A fourth aspect of the present application provides a lithium-ion secondary battery comprising: a positive electrode plate, a negative electrode plate, a separator, and an electrolyte.

The positive electrode plate is a positive electrode plate provided in the third aspect of the present application.

The negative electrode plate may be a lithium metal sheet, and the negative electrode plate may also be a negative electrode diaphragm including a negative electrode current collector and a negative electrode current collector.

The negative electrode film usually includes a negative active material and optionally a conductive agent, a binder, and a thickener. The present application is not particularly limited, and may be selected according to actual needs.

As an example, the negative active material may be selected from one or more of metallic lithium, natural graphite, artificial graphite, mesocarbon microbeads (abbreviated as MCMB), hard carbon, soft carbon, silicon, silicon-carbon composite, SiO, Li-Sn alloy, Li-Sn-O alloy, Sn, SnO, $SnO_2$, spinel lithium titanate $Li_4Ti_5O_{12}$ and Li-Al alloy; the conductive agent may be selected from one or more of graphite, superconducting carbon, acetylene black, carbon black, ketjen black, carbon dots, carbon nanotubes, graphene and carbon nanofibers; the binder may be selected from one or more of styrene butadiene rubber (SBR), SD-3, polyvinylidene fluoride (PVDF), polytetrafluoroethylene (PTFE), polyvinyl butyral (PVB), water-based acrylic resin and carboxymethyl cellulose (CMC); and the thickener may be carboxymethyl cellulose (CMC).

The negative electrode current collector may be a material such as a metal foil, a carbon coated metal foil or a porous metal plate, for example a copper foil.

The negative electrode plate comprising the negative electrode current collector and the negative electrode film can be prepared in accordance with a conventional method in the art. The negative active material and optionally conductive agent, binder and thickener are usually dispersed in a solvent (wherein the solvent may be deionized water or NMP) to form a uniform negative electrode slurry, and the negative electrode slurry is coated on the negative electrode current collector. After the steps of drying, rolling, etc., the negative electrode plate is obtained.

The above-mentioned separator is not particularly limited, and any well-known porous structural separator having electrochemical stability and chemical stability may be selected, and may be, for example, a single-layer or multilayer film of one or more of glass fiber, non-woven fabric, polyethylene (PE), polypropylene (PP) and polyvinylidene fluoride (PVDF).

The above electrolyte comprises an organic solvent and an electrolytic lithium salt, and is not particularly limited in the present application, and may be selected according to actual needs.

As an example, the organic solvent may be selected from one or more of ethylene carbonate (EC), propylene carbonate (PC), ethyl methyl carbonate (EMC), diethyl carbonate (DEC), and dimethyl carbonate (DMC). The electrolytic lithium salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethylsulfonyl)imide (LiTFSI), lithium trifluoromethanesulfonate (LiTFS), lithium difluorooxalate borate (LiDFOB), lithium dioxalate borate (LiBOB), lithium difluorophosphate (LiPO$_2$F$_2$), Lithium difluorodioxalate phosphate (LiDFOP) and lithium tetrafluorooxalate phosphate (LiTFOP).

The positive electrode plate, the separator and the negative electrode plate are stacked in order, so that the separator is in a role of isolation between the positive electrode plate and the negative electrode plate to obtain a battery core, or the positive electrode plate, the separator and the negative electrode plate may be wound to obtain a battery core. The lithium-ion secondary battery is prepared by placing the battery core in a packaging shell, injecting an electrolyte, and sealing. The lithium-ion secondary battery can be of various shapes and sizes, such as a cylindrical type, a prism type, a button type, or a pouch type.

## Example

The present application is described in detail with reference to the preferred embodiments of the invention, which are to be understood by those skilled in the art. All parts, percentages, and ratios reported in the following examples are by weight unless otherwise stated, and all reagents used in the examples are commercially available or synthetically obtained by conventional methods and are directly used without further processing, and the instruments used in the examples are commercially available.

## Preparation of buckle battery

Preparation of positive electrode plate: The positive active material, the conductive agent Super P and the binder PVDF were dispersed in the solvent NMP at a weight ratio of 90:5:5, and thoroughly stirred and mixed to form a uniform positive electrode slurry. The slurry was coated on a positive electrode current collector aluminum foil, dried, and cold pressed to form a wafer having a diameter of 14 mm.

Preparation of negative electrode plate: The lithium metal sheet was punched into a wafer having a diameter of 14 mm.

Preparation of electrolyte: Isovolumetric EC, DEC, and DMC were uniformly mixed to obtain an organic solvent, and then 1 mol/L of LiPF$_6$ was uniformly dissolved in such organic solvent.

Preparation of buckle battery: The positive electrode plate, the separator and the negative electrode plate were stacked in order to prepare a battery core, and the above electrolyte solution was injected into the battery core to complete the preparation of the buckle battery. The above operation was carried out in a deduction box.

## Preparation of wound battery

Preparation of positive electrode plate: The positive active material, the conductive agent acetylene black and the binder PVDF were thoroughly stirred and mixed in a solvent NMP at a weight ratio of 94:3:3 to form a uniform positive electrode slurry. The slurry was coated on a positive electrode current collector aluminum foil, and dried and cold pressed to obtain a positive electrode plate.

Preparation of negative electrode plate: The negative active material artificial graphite and hard carbon, conductive agent acetylene black, binder SBR and thickener CMC were thoroughly stirred and mixed at a weight ratio of 90:5:2:2:1 in an appropriate amount of deionized water, to form a uniform negative electrode slurry. The negative electrode slurry was coated on the negative electrode current collector copper foil, dried, and cold pressed to obtain a negative electrode plate.

Preparation of electrolyte: Isovolumetric EC, DEC, and DMC were uniformly mixed to obtain an organic solvent, and then 1 mol/L of LiPF$_6$ was uniformly dissolved in such organic solvent.

Preparation of wound battery: the positive electrode plate, the separator and the negative electrode plate were stacked in order, and after winding, the battery core was obtained, wherein the separator was made of a PE porous polymer film. The battery core was placed in the package shell, and the above electrolyte solution was injected into the battery core and sealed, to prepare a wound battery.

## Example 1

Preparation of positive active material:

Step S1: A transition metal source [Ni$_{0.8}$Co$_{0.1}$Mn$_{0.1}$](OH)$_2$, zirconia as A element source and lithium hydroxide as lithium source were mixed in a high-speed mixer, and the mixing time was 1 h, wherein the molar ratio of lithium hydroxide to the transition metal source was Li/Me=1.05, and the amount of zirconia as A element source was chosen such that the content of the A element Zr in the positive active material was 1000 ppm. The mixed material was added to the atmosphere sintering furnace for sintering treatment. The sintering temperature was 830°C, and the sintering atmosphere was an oxygen atmosphere, and the oxygen concentration was 90%, and the sintering time was 15 h. Thus the active material matrix particles were obtained.

Step S2: The active material matrix particles and $Al_2O_3$ as M element source were mixed in a high-speed mixer, and the mixing time was 1 h, wherein the amount of $Al_2O_3$ as M element source was chosen such that the content of Al as M element in the doped layer was 1500 ppm based on the positive active material. The mixed material was added to the atmosphere sintering furnace for sintering treatment. The sintering temperature was 650°C, and the sintering atmosphere was oxygen atmosphere, and the oxygen concentration was 90%, and the sintering time was 5 h, so that the M element Al was doped on the outer layer of the particles to obtain bulk particles of the active material.

Step S3: A 0.05 mol/L $B_2O_3$ ethanol solution was prepared and added to a stirred washing tank. Then the active material bulk particles was added with a solid-liquid ratio of 1:2, wherein the washing temperature was 20°C, and the stirring speed was 200 rpm, and the washing time was 5 min. After washing, the mixture was centrifuged, and then the washed active material bulk particles were dried in a vacuum oven at 100 °C for 10 h.

Step S4: The dried active material bulk particles after washing and the N element source $Al_2O_3$ were mixed in a high-speed mixer, and the mixing time was 2 h, wherein the amount of the N element source $Al_2O_3$ was chosen such that the content of N element Al in the coating was 500 ppm based on the positive active material. The mixed material was added to the atmosphere sintering furnace for sintering treatment. The sintering temperature was 250°C, and the sintering atmosphere was oxygen atmosphere, and the oxygen concentration was 90%, and the sintering time was 5 h, so that a coating layer of an oxide containing N element Al was formed on the outer surface of the active material bulk particles, to obtain a positive active material.

In the positive active material, the ratio of the sum of the content of the M element and the content of the N element to the average particle diameter of the positive active material was 200 ppm/$\mu$m.

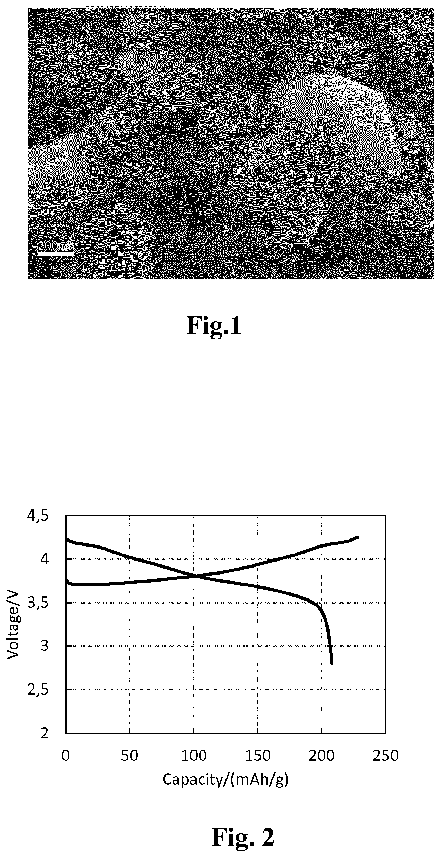

Fig. 1 shows an SEM image of the positive active material. It can be seen that the positive active material is a secondary particle formed by agglomeration of primary particles, wherein the primary particle has a cuboid structure with an aspect ratio of 1:1 to 3:1.

According to the above-described method for producing a buckle battery and a wound battery, a positive active material of the present embodiment is used to prepare a buckle battery and a wound battery.

Fig. 2 is a graph showing the first charge and discharge curve of the buckle battery. The buckle battery has an initial gram capacity of 207 mAh/g at 2.8 V to 4.25 V under a constant temperature environment of 25°C. The battery capacity and energy density of the battery according to the present application has a significant improvement.

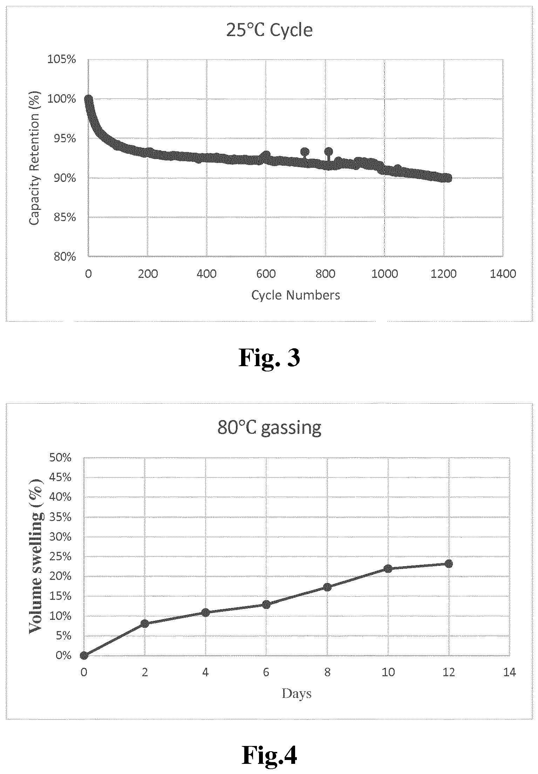

Fig. 3 is a graph showing the cycle cure of a wound battery at 25°C. The capacity retention rate of the wound battery after 1200 cycles is 90.2% at 2.8 V to 4.25 V under a constant temperature environment of 25°C, which is higher than 90%. As described above, the cycle performance of the battery according to the present application is remarkably improved.

Fig. 4 is a graph showing a flatulence curve of a wound battery at 80°C. The volume expansion ratio of the wound battery after storage at 80°C for 12 days is 23.2%, which is below 25%. Thus the battery safety performance according to the present application is remarkable improved.

## Example 2

Preparation of positive active material:

Step S1: A transition metal source $[Ni_{0.7}CO_{0.15}Mn_{0.15}](OH)_2$, magnesium oxide as A element source and lithium hydroxide as lithium source were mixed in a high-speed mixer, and the mixing time was 2 h, wherein the molar ratio of lithium hydroxide to the transition metal source was Li/Me=1.05, and the amount of magnesium oxide as A element source was chosen such that the content of the A element Mg in the positive active material was 3000 ppm. The mixed material was added to the atmosphere sintering furnace for sintering treatment. The sintering temperature was 850°C, and the sintering atmosphere was an oxygen atmosphere, and the oxygen concentration was 80%, and the sintering time was 20 h. Thus the active material matrix particles were obtained.

Step S2: The active material matrix particles and $AlF_3$ as M element source were mixed in a high-speed mixer, and the mixing time was 2 h, wherein the amount of $AlF_3$ as M element source was chosen such that the content of Al as M element in the doped layer was 2000 ppm based on the positive active material. The mixed material was added to the atmosphere sintering furnace for sintering treatment. The sintering temperature was 750°C, and the sintering atmosphere was oxygen atmosphere, and the oxygen concentration was 80%, and the sintering time was 10 h, so that the M element Al was doped on the outer layer of the particles to obtain bulk particles of the active material.

Step S3: A 0.05 mol/L $H_3BO_3$ solution (wherein the solvent was deionized water) was prepared and added to a stirred washing tank. Then the active material bulk particles was added with a solid-liquid ratio of 1:0.5, wherein the washing temperature was 40°C, and the stirring speed was 1000 rpm, and the washing time was 10 min. After washing, the mixture was centrifuged, and then the washed active material bulk particles were dried in a vacuum oven at 120°C for 5 h.

Step S4: The dried active material bulk particles after washing and the N element source $AlF_3$ and $B_2O_3$ were mixed in a high-speed mixer, and the mixing time was 2 h, wherein the amount of the N element source $AlF_3$ was chosen such that the content of N element Al in the coating was 100 ppm based on the positive active material and the amount of the N element source $B_2O_3$ was chosen such that the content of N element B in the coating was 1500 ppm based on the positive active material. The mixed material was added to the atmosphere sintering furnace for sintering treatment. The sintering temperature was 500°C, and the sintering atmosphere was oxygen atmosphere, and the oxygen concentration was 80%, and the sintering time was 5 h, so that a coating layer of an oxide containing N element Al and B was formed on the outer surface of the active material bulk particles, to obtain a positive active material.

In the positive active material, the ratio of the sum of the content of the M element and the content of the N element to the average particle diameter of the positive active material was 350 ppm/$\mu$m.

According to the above-described method for producing a buckle battery and a wound battery, a positive active material of the present example was used to prepare a buckle battery and a wound battery.

## Example 3

Preparation of positive active material:

Step S1: A transition metal source $[Ni_{0.85}Co_{0.1}Mn_{0.05}](OH)_2$, titanium oxide as A element source and lithium hydroxide as lithium source were mixed in a high-speed mixer, and the mixing time was 0.5 h, wherein the molar ratio of lithium hydroxide to the transition metal source was Li/Me=1.05, and the amount of titanium oxide as A element source was chosen such that the content of the A element Ti in the positive active material was 100 ppm. The mixed material was added to the atmosphere sintering furnace for sintering treatment. The sintering temperature was 750°C, and the sintering atmosphere was a pure oxygen atmosphere, and the sintering time was 20 h. Thus the active material matrix particles were obtained.

Step S2: The active material matrix particles and $Mg(OH)_2$ as M element source were mixed in a high-speed mixer, and the mixing time was 0.5 h, wherein the amount of $Mg(OH)_2$ as M element source was chosen such that the content of Mg as M element in the doped layer was 2000 ppm based on the positive active material. The mixed material was added to the atmosphere sintering furnace for sintering treatment. The sintering temperature was 700°C, and the sintering atmosphere was a pure oxygen atmosphere, and the sintering time was 8 h, so that the M element Mg was doped on the outer layer of the particles to obtain bulk particles of the active material.

Step S3: A 1 mol/L $C_5H_6B(OH)_2$ solution (wherein the solvent was deionized water) was prepared and added to a stirred washing tank. Then the active material bulk particles was added with a solid-liquid ratio of 1:5, wherein the washing temperature was 30°C, and the stirring speed was 20 rpm, and washing time was 2 min. After washing, the mixture was centrifuged, and then the washed active material bulk particles were dried in a vacuum oven at 90°C for 10 h.

Step S4: The dried active material bulk particles after washing and the N element source $Mg(OH)_2$ and ZnO were mixed in a high-speed mixer, and the mixing time was 0.5 h, wherein the amount of the N element source $Mg(OH)_2$ was chosen such that the content of N element Mg in the coating was 1000 ppm based on the positive active material and the amount of the N element source ZnO was chosen such that the content of N element Zn in the coating was 1000 ppm based on the positive active material. The mixed material was added to the atmosphere sintering furnace for sintering treatment. The sintering temperature was 200°C, and the sintering atmosphere was a pure oxygen atmosphere, and the sintering time was 5 h, so that a coating layer of an oxide containing N element Mg and Zn was formed on the outer surface of the active material bulk particles, to obtain a positive active material.

In the positive active material, the ratio of the sum of the content of the M element and the content of the N element to the average particle diameter of the positive active material was 1000 ppm/$\mu$m.

According to the above-described method for producing a buckle battery and a wound battery, a positive active material of the present embodiment was used to prepare a buckle battery and a wound battery.

## Comparative example 1

Preparation of positive active material:

The transition metal source $[Ni_{0.8}Co_{0.1}Mn_{0.1}](OH)_2$, zirconia and lithium hydroxide were mixed in a high-speed mixer. The mixing time was 1 h, and the molar ratio of lithium hydroxide to the transition metal source was Li/Me=1.05, and the amount of zirconia was chose such that the content of Zr in the positive active material was 1000 ppm. The mixed material was added to the atmosphere sintering furnace for sintering treatment, wherein the sintering temperature was 830°C, and the sintering atmosphere was oxygen atmosphere, and the oxygen concentration was 90%, and the sintering time was 15 h. Thus the positive active material was obtained.

According to the above method for preparing a buckle battery and a wound battery, a buckle battery and a wound battery were prepared by using the positive active material of the present comparative example.

**Comparative example 2**

Preparation of positive active material:

Step S1: A transition metal source $[Ni_{0.8}Co_{0.1}Mn_{0.1}](OH)_2$, zirconia and lithium hydroxide were mixed in a high-speed mixer, and the mixing time was 1 h, wherein the molar ratio of lithium hydroxide to the transition metal source was Li/Me=1.05, and the amount of zirconia was chosen such that the content of Zr in the positive active material was 1000 ppm. The mixed material was added to the atmosphere sintering furnace for sintering treatment. The sintering temperature was 830°C, and the sintering atmosphere was an oxygen atmosphere, and the oxygen concentration was 90%, and the sintering time was 15 h. Thus the active material matrix particles were obtained.

Step S2: The active material matrix particles and $Al_2O_3$ were mixed in a high-speed mixer, and the mixing time was 1 h, wherein the amount of $Al_2O_3$ was chosen such that the content of Al in the positive active material was 2000 ppm based on the positive active material. The mixed material was added to the atmosphere sintering furnace for sintering treatment. The sintering temperature was 650°C, and the sintering atmosphere was oxygen atmosphere, and the oxygen concentration was 90%, and the sintering time was 5 h, so that Al was doped on the outer layer of the particles to obtain the positive active material.

In the positive active material, the ratio of the content of Al to the average particle diameter of the positive active material was 200 ppm/$\mu$m.

According to the above method for preparing a buckle battery and a wound battery, a buckle battery and a wound battery were prepared by using the positive active material of the present comparative example.

**Tests**

Test of residual lithium amount on the surface of positive active material

The amount of residual lithium on the surface of the positive active material was measured by acid-base titration, including: 30 g of the positive active material was added to 100 ml of pure water, stirred for 30 min, allowed to stand for 5 min, filtered, and then 10 ml of the supernatant was taken; 0.05 mol/L of hydrochloric acid standard solution was used to titrate the residual lithium dissolved in the positive active material (including lithium carbonate and lithium hydroxide), using the pH electrode as the indicator electrode, determining the end point by the sudden change of the potential change, and calculating the amount of residual lithium on the surface of the positive active material.

Test of the initial capacity per gram and the initial Coulomb efficiency of the buckle battery

Under constant temperature of 25°C, the buckle battery was charged to a voltage of 4.25 V with a constant current at 0.1C rate, and then charged to a current of 0.05 mA or less with a constant voltage of 4.25 V, and then allowed to stand for 2 min. At this time, the charging capacity was recorded as $c_0$, and then it was discharged to a voltage of 2.8 V with a constant current at 0.1C rate. The discharge capacity at this time was the initial capacity per gram, which was recorded as $d_0$. The initial coulomb efficiency is $ice_0 = d_0/c_0 \times 100\%$.

Test of the initial capacity per gram and the initial Coulomb efficiency of the wound battery

The wound battery was charged to a voltage of 4.25 V with a constant current at 1/3C rate, and then charged to a current of 0.05 mA or less with a constant voltage of 4.25 V, and then allowed to stand for 5 min. At this time, the charging capacity was recorded as $C_0$, and then it was discharged to a voltage of 2.8V with a constant current at 1/3C rate. The discharge capacity at this time was the initial capacity per gram, which was recorded as $D_0$. The initial Coulomb efficiency is $ICE_0 = D_0/C_0 \times 100\%$.

Cycle performance test of a wound battery at 25°C

Under constant temperature of 25°C, the wound battery was charged to a voltage of 4.25 V with a constant current at 1C rate, and then charged to a current of 0.05 mA or less with a constant voltage of 4.25 V, then allowed to stand for 5 min, and then discharged to a voltage of 2.8V with a constant current at 1C rate, and allowed to stand for 5 min. This was a cycle of charge and discharge. The discharge capacity at this time was recorded as the discharge capacity of the first cycle of the wound battery. The wound battery was subjected to 1200 cycles of charge and discharge test in accordance with the above method, and the discharge capacity at the 1200th cycle was recorded.

Cycle capacity retention rate of the wound battery (%) of $1200^{th}$ cycle at 25°C

$$CR_{25°C}(\%)= \text{discharge capacity of the}1200^{th} \text{ cycle/discharge capacity at the first cycle} \times 100\%.$$

Cycle performance test of a wound battery at 45°C

Similar to cycle performance test of the wound battery at 25°C, except that the test environment was a constant temperature of 45°C and the number of cycles was 800.

Cycle capacity retention rate of the wound battery (%) of $800^{th}$ cycle at 45°C

$$CR_{45°C}(\%) = \text{discharge capacity of the}800^{th} \text{ cycle/discharge capacity at the first cycle} \times 100\%.$$

Storage flatulence test of a wound battery at 80°C

The wound battery was first placed in a constant temperature environment of 25°C for 30 min, then charged to a voltage of 4.25 V with at a constant current at 1C rate, and then charged to a current of 0.05 mA or less with a constant voltage of 4.25 V. At this time, the volume of the wound battery was tested and recorded as Vo; then the wound battery was placed in an incubator at 80°C, and the volume of the wound battery after 10 days of storage was measured and recorded as $V_1$. In this test, the volume of the wound battery was tested using the drainage method.

The volume expansion ratio of the wound battery after storage at 80°C for 10 days is $\Delta V (\%) = (V_1-V_0)/V_0 \times 100\%$.

The positive active material, the buckle battery, and the wound battery of Examples 1-3 and Comparative Examples 1-2 were tested according to the above test methods, and the test results were shown in Table 1 below.

Table 1

| | amount of residual lithium on the surface/ppm | $d_0$ /(mAh/g) | $ice_0$ /% | $D_0$ / (mAh/g) | $ICE_0$ /% | $CR_{25°C}$ /% | $CR_{45°C}$ /% | $\Delta V$ /% |
|---|---|---|---|---|---|---|---|---|
| Comp.1 | 2120 | 194 | 87.4 | 189.2 | 86.1 | 78.2 | 65.2 | 52.3 |
| Comp.2 | 1560 | 192 | 86.9 | 187.8 | 85.4 | 81.3 | 71.3 | 46.3 |
| Example 1 | 851 | 207 | 92.3 | 201.1 | 89.7 | 90.2 | 86.9 | 22.1 |
| Example 2 | 650 | 206 | 92.1 | 200.8 | 89.5 | 89.5 | 86.1 | 21.3 |
| Example 3 | 932 | 208 | 92.4 | 201.9 | 89.9 | 89.2 | 85.6 | 24.2 |

Through comparative analysis of Comparative Example 1 and Comparative Example 2, it can be seen that after doping with 2000 ppm of Al the cycle performance at high/low temperature and the anti-flatulence performance of the lithium-ion secondary battery are improved to some extent, but they are not ideal and sacrifice the battery capacity, energy density, and initial coulomb efficiency, thus the battery capacity, energy density, and initial coulomb efficiency are reduced.

From the comparative analysis of Examples 1-3 and Comparative Example 2, it can be seen that with the positive active material of the present application, the capacity of the buckle battery reaches 205 mAh/g or more, and the capacity of the wound battery reaches 200 mAh/g or more. The capacity and energy density of the battery are significantly improved. The initial coulomb efficiency of the buckle battery is improved to 92% or more, and the initial coulomb efficiency of the wound battery is improved to 89% or more. That means that the initial coulomb efficiency of the battery is also significantly improved. The capacity retention rate of the wound battery after 1200 cycles at 25 °C is 89% or more, and the capacity retention rate after 800 cycles at 45°C is 85% or more. Thus the cycle performance of the battery is greatly improved. In addition, the volume expansion ratio of the wound battery after storage for 10 days at 80°C remains 25% or less, i.e. the battery's anti-flatulence performance and safety performance have been greatly improved. By using the positive active material of the invention, the electrochemical performance of the battery is comprehensively and significantly improved, and the battery has excellent comprehensive electrochemical performance.

The above is only the specific embodiment of the present application, but the scope of the present application is not limited thereto. Various equivalent modifications and variations of the present application that can be easily conceived by those skilled in the art are intended to be included within the scope of the present application. Therefore, the scope of the invention should be determined by the scope of the claims.

**Claims**

1. A positive active material, comprising active material bulk particles and a coating layer of an oxide containing N element,

   wherein the surface of the active material bulk particles is doped with M element to form a doped layer, and the content of the M element is 400 ppm to 3000 ppm, and the content of the M element gradually decreases from the outer surface of the active material bulk particles towards the core direction;
   wherein the content of the N element in the coating layer is 100 ppm to 2000 ppm; wherein the M element and the N element are each independently selected from one or more of Mg, Ca, Ce, Ti, Zr, Al, Zn, and B;

   wherein the content of the M element and the content of the N element are based on the positive active material; and wherein the average content of the N element per unit volume of the coating layer is greater than the average content of the M element per unit volume of the doped layer;wherein the positive active material is a lithium transition metal oxide having a layered structure, and the lithium transition metal oxide having a layer structure is a compound represented by the formula (1),

$$Li_{1+a}[Ni_xCo_yMn_zA_dM_bN_e]O_{2-e}X_e \qquad (1)$$

   wherein A is selected from one or more of Mg, Ca, Ce, Ti, Zr, Al, Zn and B, and X is selected from one or more of S, N, F, Cl, Br and I; wherein $0<x<1$, $0{\leq}y<0.3$, $0 \leq z<0.3$, $0<a<0.2$, $0<b<0.2$, $0<c<0.1$, $0{\leq}d<0.2$, $0{\leq}e{\leq}0.2$, $x+y+z+b+d+c=1$, preferably, $0.6 < x < 1$;
   wherein the thickness of the doped layer is from 10% to 30% of the average particle diameter of the active material bulk particles; and/or
   wherein the thickness of the coating layer is from 0.001 $\mu$m to 0.2 $\mu$m.

2. The positive active material according to claim 1, wherein in the positive active material, the ratio of the sum of the content of the M element and the content of the N element to the average particle diameter of the positive active material is from 25 ppm/$\mu$m to 1000 ppm/$\mu$m.

3. The positive active material according to claim 1, wherein in the positive active material, the M element is the same as the N element and both are L element, and the content of the L element gradually decreases from the outer surface of the positive active material towards the core direction; and
   wherein the L element is selected from one or more of Mg, Ca, Ce, Ti, Zr, Al, Zn and B.

4. The positive active material according to claim 1, wherein the positive active material is a secondary particle formed by agglomeration of primary particles; wherein the primary particle has a longest dimension and a shortest dimension, and the ratio of the longest dimension to the shortest dimension is 1:1~3:1; wherein the average particle diameter $D_v50$ of the secondary particle is from 5 $\mu$m to 20 $\mu$m, preferably from 8 $\mu$m to 15 $\mu$m, and further preferably from 9 $\mu$m to 11 $\mu$m.

5. The positive active material according to claim 1, wherein the outer surface of the coating layer is a rough surface; and/or
   wherein the specific surface area of the positive active material is 0.2 m$^2$/g to 1 m$^2$/g, and preferably 0.3 m$^2$/g to 0.8 m$^2$/g.

6. The positive active material according to claim 1, wherein the amount of residual lithium on the surface of the positive active material is 1000 ppm or less, preferably 800 ppm or less.

7. A positive electrode plate comprising a current collector and a positive electrode film disposed on at least one surface of the current collector, wherein the positive electrode film comprises the positive active material according to any one of claims 1 to 6.

8. A lithium-ion secondary battery comprising a positive electrode plate, a negative electrode plate, a separator, and an electrolyte, wherein the positive electrode plate is the positive electrode plate according to claim 7.

9. A method for preparing the positive active material according to any one of claims 1-6, **characterized in that** the method comprises:

   mixing a transition metal source with a lithium source and performing a sintering treatment to obtain active material matrix particles;
   mixing the active material matrix particles with a source of M element and performing a sintering treatment to form a doped layer on the surface of the particles by doping with the M element, thereby obtaining active material bulk particles;
   mixing the active material bulk particles with a source of N element and performing a sintering treatment to form a coating layer of an oxide containing N element on the outer surface of the active material bulk particles to obtain a positive active material;
   wherein in the step of mixing the transition metal source with the lithium source and performing the sintering treatment to obtain active material matrix particles, the sintering temperature is 700°C to 950°C, and the sintering time is 5 h to 25 h; and/or,
   in the step of mixing the active material matrix particles with the source of M element and performing a sintering treatment to dope the M element on the surface of the particles to form a doped layer to obtain the active material bulk particles, the sintering temperature is 500°C to 750°C, and the sintering time is 5 h to 25 h; and/or
   in the step of mixing the active material bulk particles with the source of N element and performing a sintering treatment to form a coating layer of an oxide containing N element on the outer surface of the active material bulk particles to obtain a positive active material, the sintering temperature is 200°C to 500°C, and the sintering time is 5 h to 25 h.

10. The method according to claim 9, wherein the step of mixing the transition metal source with the lithium source and performing the sintering treatment to obtain the active material matrix particles comprises:

   mixing a transition metal source, a source of A element, and a lithium source to obtain a mixed material;
   sintering the mixed material to obtain active material matrix particles;
   wherein the A element is selected from one or more of Mg, Ca, Ce, Ti, Zr, Al, Zn, and B, and the content of the A element in the positive active material is 100 ppm to 3000 ppm.

11. The method according to claim 9, wherein after the step of mixing the active material matrix particles with the source of M element and performing a sintering treatment to dope the M element on the surface of the particles to form a doped layer to obtain the active material bulk particles, the method further comprises washing the active material bulk particles in a solution of a boron-containing compound and drying.

12. The method according to claim 11, wherein the concentration of the boron-containing compound in the solution is from 0.01 mol/L to 1 mol/L; and/or
   wherein the boron-containing compound is selected from one or more of $BCl_3$, $B_2(SO_4)_3$, $B(NO_3)_3$, BN, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ and $(C_3H_7O)_3B$.

**Patentansprüche**

1. Positives Aktivmaterial, umfassend Aktivmaterial-Volumenpartikel und eine Beschichtung aus einem Oxid, das ein N-Element enthält,

   wobei die Oberfläche der Aktivmaterial-Massenpartikel mit M-Element dotiert ist, um eine dotierte Schicht zu bilden, und der Gehalt des M-Elements 400 ppm bis 3000 ppm beträgt, und der Gehalt des M-Elements allmählich von der äußeren Oberfläche der Aktivmaterial-Massenpartikel in Richtung des Kerns abnimmt;
   wobei der Gehalt des N-Elements in der Beschichtung 100 ppm bis 2000 ppm beträgt; wobei das M-Element und das N-Element jeweils unabhängig aus einem oder mehreren von Mg, Ca, Ce, Ti, Zr, Al, Zn und B ausgewählt sind;

wobei der Gehalt des M-Elements und der Gehalt des N-Elements auf dem positiven Aktivmaterial basieren; und wobei der durchschnittliche Gehalt des N-Elements pro Volumeneinheit der Beschichtung größer als der durchschnittliche Gehalt des M-Elements pro Volumeneinheit der dotierten Schicht ist; wobei das positive Aktivmaterial ein Lithium-Übergangsmetalloxid mit einer Schichtstruktur ist und das Lithium-Übergangsmetalloxid mit einer Schichtstruktur eine durch die Formel (1) dargestellte Verbindung ist,

$$Li_{1+a}[Ni_xCo_yMn_zA_dM_bN_c]O_{2-e}X_e \qquad (1)$$

wobei A aus einem oder mehreren von Mg, Ca, Ce, Ti, Zr, Al, Zn und B ausgewählt ist und X aus einem oder mehreren von S, N, F, Cl, Br und I ausgewählt ist; wobei $0<x<1$, $0\leq y<0,3$, $0\leq z<0,3$, $0<0,2$, $0<b<0,2$, $0<c<0,1$, $0<d<0,2$, $0<e<0,2$, $x+y+z+b+d+c=1$, vorzugsweise $0,6<x<1$;
wobei die Dicke der dotierten Schicht 10 % bis 30 % des durchschnittlichen Teilchendurchmessers der Aktivmaterial-Massenpartikel beträgt; und/oder
wobei die Dicke der Beschichtung 0,001 μm bis 0,2 μm beträgt.

2. Positives Aktivmaterial nach Anspruch 1, wobei in dem positiven Aktivmaterial das Verhältnis der Summe des Gehalts des M-Elements und des Gehalts des N-Elements zum durchschnittlichen Teilchendurchmesser des positiven Aktivmaterials 25 ppm/μm bis 1000 ppm/μm beträgt.

3. Positives Aktivmaterial nach Anspruch 1, wobei in dem positiven Aktivmaterial das M-Element dasselbe wie das N-Element ist und beide L-Elemente sind und der Gehalt des L-Elements allmählich von der äußeren Oberfläche des positiven Aktivmaterials in Richtung des Kerns abnimmt; und
wobei das L-Element aus einem oder mehreren von Mg, Ca, Ce, Ti, Zr, Al, Zn und B ausgewählt ist.

4. Positives Aktivmaterial nach Anspruch 1, wobei das Aktivmaterial ein Sekundärteilchen ist, das durch Agglomeration von Primärteilchen gebildet wird; wobei das Primärteilchen eine längste Abmessung und eine kürzeste Abmessung aufweist und das Verhältnis der längsten Abmessung zur kürzesten Abmessung 1:1 bis 3:1 beträgt; wobei der durchschnittliche Teilchendurchmesser Dv50 des Sekundärteilchens 5 μm bis 20 μm, vorzugsweise 8 μm bis 15 μm und weiter bevorzugt 9 μm bis 11 μm beträgt.

5. Positives Aktivmaterial nach Anspruch 1, wobei die äußere Oberfläche der Beschichtung eine raue Oberfläche ist; und/oder
wobei die spezifische Oberfläche des positiven Aktivmaterials 0,2 m²/g bis 1 m²/g und vorzugsweise 0,3 m²/g bis 0,8 m²/g beträgt.

6. Positives Aktivmaterial nach Anspruch 1, wobei die Menge an restlichem Lithium auf der Oberfläche des positiven Aktivmaterials 1000 ppm oder weniger, vorzugsweise 800 ppm oder weniger beträgt.

7. Positive Elektrodenplatte, umfassend einen Stromkollektor und einen positiven Elektrodenfilm, der auf mindestens einer Oberfläche des Stromkollektors angeordnet ist, wobei der positive Elektrodenfilm das positive Aktivmaterial nach einem der Ansprüche 1 bis 6 umfasst.

8. Lithium-Ionen-Sekundärbatterie, umfassend eine positive Elektrodenplatte, eine negative Elektrodenplatte, einen Separator und einen Elektrolyten, wobei die positive Elektrodenplatte die positive Elektrodenplatte nach Anspruch 7 ist.

9. Verfahren zur Herstellung des positiven Aktivmaterials nach einem der Ansprüche 1-6, **dadurch gekennzeichnet, dass** das Verfahren umfasst:

Mischen einer Übergangsmetallquelle mit einer Lithiumquelle und Durchführen einer Sinterbehandlung zum Erhalten von Aktivmaterial-Matrixpartikel;
Mischen der Aktivmaterial-Matrixpartikel mit einer Quelle des M-Elements und Durchführen einer Sinterbehandlung zum Bilden einer dotierten Schicht auf der Oberfläche der Partikel durch Dotieren mit dem M-Element, um Aktivmaterial-Massenpartikel zu erhalten;
Mischen der Aktivmaterial-Massenpartikel mit einer Quelle des N-Elements und Durchführen einer Sinterbehandlung zum Bilden einer Beschichtung aus einem N-Element enthaltenden Oxid auf der äußeren Oberfläche der Aktivmaterial-Volumenteilchen, um ein positives Aktivmaterial zu erhalten;
wobei in dem Schritt des Mischens der Übergangsmetallquelle mit der Lithiumquelle und des Durchführens der Sinterbehandlung zum Erhalten von Aktivmaterial-Matrixpartikel die Sintertemperatur 700°C bis 950°C beträgt und die Sinterzeit 5 h bis 25 h beträgt; und/oder,

im Schritt des Mischens der Aktivmaterial-Matrixpartikel mit der Quelle des M-Elements und des Durchführens einer Sinterbehandlung zum Bilden einer dotierten Schicht auf der Oberfläche der Partikel durch Dotieren mit dem M-Element, um Aktivmaterial-Massenpartikel zu erhalten, die Sintertemperatur 500°C bis 750 °C beträgt, und die Sinterzeit 5 h bis 25 h beträgt; und/oder

im Schritt des Mischens der Aktivmaterial-Massenpartikel mit der Quelle des N-Elements und Durchführen einer Sinterbehandlung zum Bilden einer Beschichtung aus einem N-Element enthaltenden Oxid auf der äußeren Oberfläche der Aktivmaterial-Massenpartikel, um ein positives Aktivmaterial zu erhalten, das die Sintertemperatur 200°C bis 500°C beträgt, und die Sinterzeit 5 h bis 25 h beträgt.

10. Verfahren nach Anspruch 9, wobei der Schritt des Mischens der Übergangsmetallquelle mit der Lithiumquelle und des Durchführens der Sinterbehandlung zum Erhalten von Aktivmaterial-Matrixpartikel Folgendes umfasst:

Mischen einer Übergangsmetallquelle, einer Quelle des A-Elements und einer Lithiumquelle, um ein gemischtes Material zu erhalten;

Sintern des gemischten Materials, um Aktivmaterial-Matrixpartikel zu erhalten;

wobei das A-Element aus einem oder mehreren von Mg, Ca, Ce, Ti, Zr, Al, Zn und B ausgewählt ist, und der Gehalt des A-Elements in dem positiven Aktivmaterial 100 ppm bis 3000 ppm beträgt.

11. Verfahren nach Anspruch 9, wobei nach dem Schritt des Mischens der Aktivmaterial-Matrixpartikel mit einer Quelle des M-Elements und Durchführen einer Sinterbehandlung zum Bilden einer dotierten Schicht auf der Oberfläche der Partikel durch Dotieren mit dem M-Element, um Aktivmaterial-Massenpartikel zu erhalten, das Verfahren ferner das Waschen der Aktivmaterial-Massepartikel in einer Lösung einer borhaltigen Verbindung und Trocknen umfasst.

12. Verfahren nach Anspruch 11, wobei die Konzentration der borhaltigen Verbindung in der Lösung 0,01 mol/l bis 1 mol/l beträgt; und/oder

wobei die borhaltige Verbindung aus einem oder mehreren von $BCl_3$, $B_2(SO_4)_3$, $B(NO_3)_3$, BN, $B_2O_3$, $BF_3$, $BBr_3$, BI3, $H_2BO_5P$, $H_3BO_3$, $C_5H_6B(OH)_2$, $C_3H_9B_3O_6$, $(C_2H_5O)_3B$ und $(C_3H_7O)_3B$ ausgewählt ist.

## Revendications

1. Matériau actif positif comprenant des particules en vrac de matériau actif et une couche de revêtement d'un oxyde contenant élément N,

dans lequel la surface des particules en vrac de matériau actif est dopée d'élément M pour former une couche dopée, et la teneur en élément M est de 400 ppm à 3000 ppm, et la teneur en élément M diminue progressivement depuis la surface externe des particules en vrac de matériau actif vers la direction centrale ;

dans lequel la teneur en élément N dans la couche de revêtement est de 100 ppm à 2000 ppm ;

dans lequel l'élément M et l'élément N sont chacun un ou plusieurs indépendamment choisis parmi Mg, Ca, Ce, Ti, Zr, Al, Zn et B ;

dans lequel la teneur en élément M et la teneur en élément N sont basées sur le matériau actif positif ; et dans lequel la teneur moyenne de l'élément N dans un volume unitaire de la couche de revêtement est supérieure à la teneur moyenne en élément M dans un volume unitaire de la couche dopée ; dans lequel le matériau actif positif est un oxyde de métal de transition au lithium ayant une structure en couches, et l'oxyde de métal de transition au lithium ayant une structure en couches est un composé de formule (1),

$$Li_{1+a}[Ni_xCo_yMn_zA_dM_bN_c]O_{2-e}X_e \qquad (1)$$

dans lequel A est un ou plusieurs choisis parmi Mg, Ca, Ce, Ti, Zr, Al, Zn et B, et X est un ou plusieurs choisis parmi S, N, F, Cl, Br et I ; où 0<x<l, 0≤y<0,3, 0≤z<0,3, 0<a<0,2, 0<b<0,2, 0<c<0,1, 0≤d<0,2, 0≤e≤0,2, x+y+z+b+d+c=l, de préférence 0,6<x<1 ;

dans lequel l'épaisseur de la couche dopée est de 10 % à 30 % de la taille des particules moyenne des particules en vrac de matériau actif ; et/ou

dans lequel l'épaisseur de la couche de revêtement est de 0,001 µm à 0,2 µm.

2. Matériau actif positif selon la revendication 1, dans lequel, dans le matériau actif positif, le rapport de la somme de la teneur en élément M et de la teneur en élément N à la taille des particules moyenne au matériau actif positif est de 25 ppm/$\mu$m à 1000 ppm/$\mu$m.

3. Matériau actif positif selon la revendication 1, dans lequel, dans le matériau actif positif, l'élément M est identique à l'élément N et les deux sont des éléments L, et la teneur en élément L diminue progressivement depuis la surface externe du matériau actif positif vers la direction centrale ; et
dans lequel l'élément L est un ou plusieurs choisis parmi Mg, Ca, Ce, Ti, Zr, Al, Zn et B.

4. Matériau actif positif selon la revendication 1, dans lequel le matériau actif positif est une particule secondaire formée par agglomération de particules primaires ; dans lequel la particule primaire a une dimension la plus longue et une dimension la plus courte, et le rapport de la dimension la plus longue à la dimension la plus courte est de 1:1 à 3:1 ; dans lequel la taille des particules moyenne Dv50 de la particule secondaire est de 5 $\mu$m à 20 $\mu$m, de préférence de 8 $\mu$m à 15 $\mu$m, et de préférence encore de 9 $\mu$m à 11 $\mu$m.

5. Matériau actif positif selon la revendication 1, dans lequel la surface externe de la couche de revêtement est une surface rugueuse ; et/ou
dans lequel le matériau actif positif a une surface spécifique de 0,2 m$^2$/g à 1 m$^2$/g, et de préférence 0.3 m$^2$/g à 0.8 m$^2$/g.

6. Matériau actif positif selon la revendication 1, dans lequel la quantité de lithium résiduel sur la surface du matériau actif positif est égale ou inférieure à 1000 ppm, de préférence égale ou inférieure à 800 ppm.

7. Plaque d'électrode positive, comprenant un collecteur de courant et un film d'électrode positive disposé sur au moins une surface du collecteur de courant, dans laquelle le film d'électrode positive comprend le matériau actif positif selon l'une quelconque des revendications 1 à 6.

8. Batterie secondaire au lithium-ion, comprenant une plaque d'électrode positive, une plaque d'électrode négative, un séparateur et un électrolyte, dans laquelle la plaque d'électrode positive est la plaque d'électrode positive selon la revendication 7.

9. Procédé de préparation le matériau actif positif selon l'une quelconque des revendications 1 à 6, **caractérisé en ce que** le procédé comprend les étapes suivantes :

mélanger une source de métal de transition avec une source de lithium et fritter pour obtenir des particules de matrice de matériau actif ;
mélanger les particules de matrice de matériau actif avec une source d'élément M et fritter pour former une couche dopée sur la surface des particules en dopant l'élément M, obtenant ainsi des particules en vrac de matériau actif ;
mélanger les particules en vrac de matériau actif avec une source d'élément N et fritter pour former une couche de revêtement d'un oxyde contenant élément N sur la surface externe des particules en vrac de matériau actif pour obtenir un matériau actif positif ;
dans lequel à l'étape de mélanger la source de métal de transition avec la source de lithium et fritter pour obtenir des particules de matrice de matériau actif, la température de frittage est de 700°C à 950°C, et la durée de frittage est de 5 h à 25 h ; et/ou,
à l'étape de mélanger les particules de matrice de matériau actif avec la source d'élément M et fritter pour doper l'élément M sur la surface des particules pour former une couche dopée, obtenant ainsi les particules en vrac de matériau actif, la température de frittage est de 500 °C à 750°C, et la durée de frittage est de 5 h à 25 h ; et/ou
à l'étape de mélanger les particules en vrac de matériau actif avec la source d'élément N et fritter pour former une couche de revêtement d'un oxyde contenant élément N sur la surface externe des particules en vrac de matériau actif pour obtenir un matériau actif positif, la température de frittage est de 200 °C à 500°C, et la durée de frittage est de 5 h à 25 h.

10. Procédé selon la revendication 9, dans lequel l'étape de mélanger la source de métal de transition avec la source de lithium et fritter pour obtenir des particules de matrice de matériau actif comprend :

mélanger une source de métal de transition, une source d'élément A et une source de lithium pour obtenir un matériau mélangé ;
fritter le matériau mélangé pour obtenir des particules de matrice de matériau actif ;
dans lequel l'élément A est un ou plusieurs choisis parmi Mg, Ca, Ce, Ti, Zr, Al, Zn et B, et la teneur en élément A dans le matériau actif positif est de 100 ppm à 3000 ppm.

11. Procédé selon la revendication 9, dans lequel après l'étape de mélanger les particules de matrice de matériau actif avec la source d'élément M et fritter pour doper l'élément M sur la surface des particules pour former une couche dopée, obtenant ainsi les particules en vrac de matériau actif, le procédé comprend en outre laver les particules en vrac de matière active dans une solution d'un composé contenant le bore et sécher.

12. Procédé selon la revendication 11, dans lequel la concentration du composé contenant le bore dans la solution est de 0,01 mol/L à 1 mol/L ; et/ou
dans lequel le composé contenant le bore est un ou plusieurs choisis parmi $BCl_3$, $B_2(SO_4)_3$, $B(NO_3)_3$, $BN$, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ et $(C_3H_7O)_3B$.

**Fig.1**

**Fig. 2**

**Fig. 3**

**Fig.4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017138309 A1

- CN 105118991 B